# EUROPEAN PATENT SPECIFICATION

(11) **EP 3 990 228 B1**
(45) Date of publication and mention of the grant of the patent: **14.06.2023**
(21) Application number: 20734522.4
(22) Date of filing: 23.06.2020
(51) Int. Cl.: B25F 5/00, B24B 23/02

(54) **HAND HELD POWER TOOL**
HANDGEHALTENES ELEKTROWERKZEUG
OUTIL ÉLECTRIQUE PORTATIF

(30) Priority: 27.06.2019 SE 1930227
(43) Date of publication of application: 04.05.2022
(73) Proprietor: Atlas Copco Industrial Technique AB, 105 23 Stockholm (SE)
(72) Inventor: WALHEIM, Torbjörn, 112 59 Stockholm (SE)
(74) Representative: Rogne, Lovisa Maria Birgitta
(86) International application number: PCT/EP2020/067495
(87) International publication number: WO 2020/260279

(56) References cited:
- EP-A1- 0 207 034
- EP-A1- 0 294 842
- EP-A1- 2 266 762
- US-A- 4 081 038
- US-A1- 2007 143 966
- US-A1- 2011 263 185
- US-A1- 2012 111 595
- US-A1- 2018 222 032
- US-B1- 6 234 256

## Description

### Technical field

The present invention generally relates to hand held power tools, more particularly to grinders configured to provide high output power.

### Background

Hand held power tools for grinding are known to be used in various industries. Where for instance preparation for welds needs to be grinded, the hand held power tools need to have high power and provide high rpm in order to effectively grind such weld preparations. The tools used in such applications therefore as such tend to vibrate and thus impose considerable vibration on an operator handling the tool many hours per day, thus placing high demands on the ergonomics of the tool.

One known way of improving the ergonomic situation is that the handles of the grinder is provided with a resilient material which is arranged to absorb vibrations. However, given the high power and rpms delivered by such tools, this is often not enough to hinder the operators from being exposed to vibrations from the grinder. The preamble of claim 1 is shown in EP2266762A1. Another example relating to vibration damping is shown in EP0294842A1.

Hence there exists a need for improvement in the field of such hand held power tools.

### Summary of the invention

Accordingly, it would be desirable to provide a design enabling a more ergonomic handling of the tool imposing less vibrations on the operator of the tool. To better address this concerns a hand held power tool as defined in the independent claim is provided. Preferred embodiments are defined in the dependent claims.

According to a first aspect of the invention a hand held power tool is provided. The hand held power tool comprising a housing. The housing comprising a back handle portion at a back end thereof, and a front handle portion at a front end thereof, wherein a motor is arranged in the back handle portion and coupled to an outgoing axle extending through the front handle portion. The front handle portion comprises an inner tubular structure and an outer tubular gripping sleeve, and wherein the outer gripping sleeve is circumferentially supported by at least two vibration absorbing resilient elements arranged around the inner tubular structure, such that a circumferential gap is formed between the inner tubular structure and the gripping sleeve.

According to the first aspect, the handheld power tool provides an inventive solution to the concerns described above by means of a design wherein front handle portion comprises an outer gripping sleeve circumferentially supported by at least two vibration absorbing resilient elements arranged around the inner tubular structure, such that a circumferential gap is formed between the inner tubular structure and the gripping sleeve.

The hand held power tool according to the invention therefore cleverly provides improved ergonomics by means of the provision of one inventive structure, i.e. the inventive outer gripping sleeve circumferentially supported by at least two vibration absorbing resilient elements arranged around the inner tubular structure, such that a circumferential gap is formed between the inner tubular structure and the gripping sleeve. This since the at least two vibration absorbing resilient elements arranged around the inner tubular structure prevents vibrations from reaching the outer gripping sleeve. The at least two vibration absorbing resilient elements arranged around the inner tubular structure also prevents heat transfer from the inner tubular structure to the outer gripping sleeve. Herby the outer gripping sleeve gets a lower temperature during use of the hand held tool comparted to prior art tool.

According to the first embodiment, the at least two vibration absorbing resilient elements are vibration absorbing resilient rings. This allows for high vibration absorbing between the inner tubular structure and an outer tubular gripping sleeve.

According to the first embodiment, the at least two vibration absorbing resilient elements have an arc shaped profile. Herby a high vibration damping between the inner tubular structure and an outer tubular gripping sleeve can be obtained. According to one embodiment, the at least two vibration absorbing resilient elements are made of polyurethane. Herby a high vibration damping between the inner tubular structure and an outer tubular gripping sleeve can be obtained. And at the same time a long life time of the at least two vibration absorbing resilient elements.

According to one embodiment, the inner tubular structure further comprises an element at the front end thereof arranged to prevent the outer tubular gripping sleeve from moving in the axial direction. Herby the outer tubular gripping sleeve can be allowed to move a small amount in the axial direction and at the same time being able to move a small amount in the circumferential direction. According to one embodiment a small movement is also allowed between the inner tubular structure and the outer tubular gripping sleeve in radial direction to enable the function of the absorbing resilient elements. According to one embodiment, the outer tubular gripping sleeve further comprises teeth's at the back end thereof arranged to interact with recesses at the front end of the back end handle portion so that the outer tubular gripping sleeve is prevented from rotating. Herby the outer tubular gripping sleeve is prevented from rotating.

According to one embodiment, the outer tubular gripping sleeve is a rubber coated steel pipe. Herby a solid and ergonomic grip of the front handle portion can be obtained.

According to one embodiment, the rubber is chloroprene or thermoplastic elastomer. Herby a solid and ergonomic grip of the front handle portion can be obtained. And at the same time a long life time of the outer tubular gripping sleeve. According to one embodiment, the front handle portion is releasably arranged from the back handle portion. Herby the power tool can be manufactured in two separate pieces. According to one embodiment, the inner tubular structure comprises a thread at the back end thereof arranged to be threaded into the front end of the back handle portion. Hereby the hand held power tool easily can be dismounted for service and maintenance. The front handle portion and the back handle portion is thus rigidly mounted to each other. Herby the tool becomes more robust since the front handle part and the rear handle part being rigidly assembled compared to prior art tool where the front spindle is movable.

According to one embodiment, the back handle portion comprises an air passage at the front end thereof arranged to prevent an increase of air pressure in the front handle portion. Herby an increase of air pressure in the front handle portion is prevented and thus grease in the bearing in the front handle portion will not be blown off by air that otherwise would have pass through the front handle portion.

According to one embodiment, the hand held power tool is configured to deliver an rpm in the range 1000-50000 rpm. The advantages of the inventive vibration damping handle structure design are of particular importance as the rpm delivered, and hence the vibration from the hand held power tool involved, increases.

Further objectives of, features of and advantages of the present invention will become apparent when studying the following detailed disclosure, the drawings and the appended claims. Those skilled in the art realize that different features of the present invention can be combined to create embodiments other than those described in the following.

### Brief description of the drawing

The invention will be described in the following illustrative and non-limiting detailed description of exemplary embodiments, with reference to the appended drawing, on which
Figure 1 is a side view of an exemplary hand held power tool according to one embodiment.
Figure 2 is a perspective view of an exemplary hand held power tool according to one embodiment.

All figures are schematic, not necessarily to scale and generally only show parts which are necessary in order to elucidate the invention, wherein other parts may be omitted or merely suggested.

### Detailed description

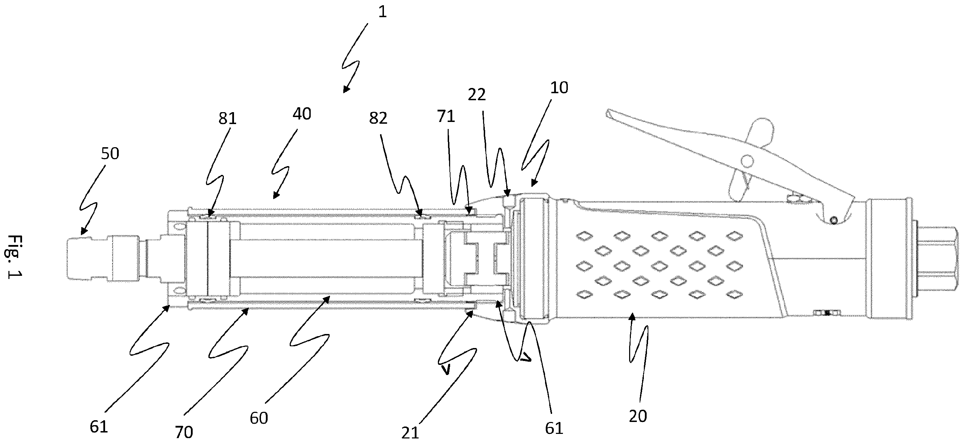

Figure 1, illustrates the exemplary hand held power tool 1 in side view. The illustrated embodiment being an air powered straight type grinder comprising a housing 10. The housing 10 comprising a back handle portion 20 at a back end thereof and a front handle 40 portion at a front end thereof. A motor (not shown) is arranged in the back handle portion 20 and coupled to an outgoing axle 50 extending through the second handle portion 40. The second handle portion 40 comprises an inner tubular structure 60 and an outer tubular gripping sleeve 70. The outer tubular gripping sleeve 70 is circumferentially supported by two vibration absorbing resilient elements 81, 82 arranged around the inner tubular structure 60, such that a circumferential gap is formed between the inner tubular structure 60 and the gripping sleeve 70.

The hand held power tool 1 further comprises an element 61 at the front end thereof arranged to allowing the outer tubular gripping sleeve 70 to move a small amount in the axial direction. The outer tubular gripping sleeve 70 further comprises teeth's 71 at the back end thereof arranged to interact with the recesses 21 at the front end of the back end handle portion 20 so that the outer tubular gripping sleeve 70 is allowed to rotate a small amount. The inner tubular structure 60 comprises a thread 61 at the back end thereof arranged to be threaded into the front end of the back handle portion 20. The back handle portion 20 comprises an air passage 22 at the front end thereof arranged to prevent an increase of air pressure in the front handle portion 40.

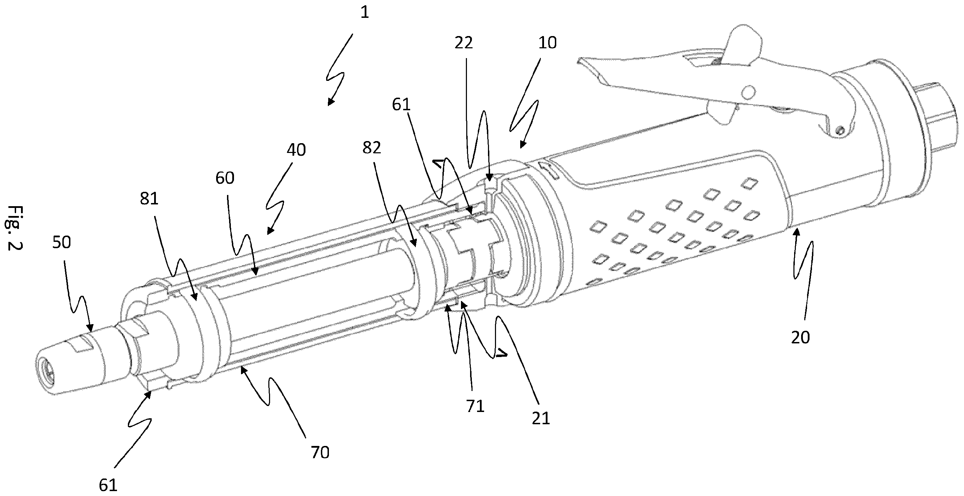

Figure 2, illustrates the exemplary hand held power tool 1 in perspective view comprising a housing 10. The housing 10 comprising the back handle portion 20 at a back end thereof. And the front handle 40 portion at the front end thereof. The motor (not shown) is arranged in the back handle portion 20 and coupled to the outgoing axle 50 extending through the second handle portion 40. The second handle portion 40 comprises an inner tubular structure 60 and an outer tubular gripping sleeve 70. The inner outer tubular gripping sleeve 70 is circumferentially supported by two vibration absorbing resilient elements 81, 82 arranged around the inner tubular structure 60, such that a circumferential gap is formed between the inner tubular structure 60 and the outer tubular gripping sleeve 70.

The hand held power tool 1 further comprises an element 61 at the front end thereof arranged to only allow the outer tubular gripping sleeve 70 to move a small amount in the axial direction. The outer tubular gripping sleeve 70 further comprises teeth's 71 at the back end thereof arranged to interact with the recesses 21 at the front end of the back end handle portion 20 so that the outer tubular gripping sleeve 70 only can move a small amount. The inner tubular structure 60 comprises a thread 61 at the back end thereof arranged to be threaded into the front end of the back handle portion 20. The back handle portion 20 comprises an air passage 22 at the front end thereof arranged to prevent an increase of air pressure in the front handle portion 40.

While the invention has been illustrated and described in detail in the drawings and foregoing description, such illustration and description are to be considered illustrative or exemplary and not restrictive; the invention is not limited to the disclosed embodiment. The skilled person understands that many modifications, variations and alterations are conceivable within the scope as defined in the appended claims. Additionally, variations to the disclosed embodiments can be understood and effected by those skilled in the art in practicing the claimed invention, form a study of the drawings, the disclosure and the appended claims. In the claims, the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

## Claims

1. A hand held power tool (1) comprising:
a housing (10), the housing (10) comprising
a back handle portion (20) at a back end thereof; and
a front handle (40) portion at a front end thereof, wherein a motor is arranged in the back handle portion (20) and coupled to an outgoing axle (50) extending through the front handle portion (40), wherein the front handle portion (40) comprises an inner tubular structure (60) and an outer tubular gripping sleeve (70), **characterized in that** the outer tubular gripping sleeve (70) is circumferentially supported by at least two vibration absorbing resilient elements (81, 82) arranged around said inner tubular structure (60), such that a circumferential gap is formed between said inner tubular structure (60) and said gripping sleeve (70), wherein the at least two vibration absorbing resilient elements are vibration absorbing resilient rings, which rings have an arc shaped profile.

2. The hand held power tool (1) according to claim 1 , wherein the at least two vibration absorbing resilient elements are made of polyurethane.

3. The hand held power tool (1) according to any of claims 1 or 2, wherein the inner tubular structure (60) further comprises an element at the front end thereof arranged to only allow the outer tubular gripping sleeve (70) to move a small amount in the axial direction.

4. The hand held power tool (1) according to any of claims 1 to 3, wherein the outer tubular gripping sleeve (70) further comprises teeth's at the back end thereof arranged to interact with the recesses at the front end of the back end handle portion so that the outer tubular gripping sleeve only can rotate a small amount.

5. The hand held power tool (1) according to any of claims 1 to 4, wherein the outer tubular gripping sleeve (70) is rubber coated steel pipe.

6. The hand held power tool (1) according to claim 5, wherein the rubber is chloroprene or thermoplastic elastomer.

7. The hand held power tool (1) according to any of claims 1 to 6, wherein the front handle (40) portion is releasably arranged from the back handle portion (20).

8. The hand held power tool (1) according to any of claims 1 to 7, wherein the inner tubular structure (60) comprises a thread at the back end thereof arranged to be threaded into the front end of the back handle portion (20).

9. The hand held power tool (1) according to any of claims 1 to 8, wherein the back handle portion (20) comprises an air passage at the front end thereof arranged to prevent an increase of air pressure in the front handle portion (40).

## Patentansprüche

1. Handgeführtes Elektrowerkzeug (1), umfassend:
ein Gehäuse (10), das Gehäuse (10) umfassend
einen hinteren Griffabschnitt (20) an einem hinteren Ende davon; und
einen vorderen Griff (40) -Abschnitt an einem vorderen Ende davon, wobei ein Motor in dem hinteren Griffabschnitt (20) angeordnet und mit einer ausgehenden Achse (50) gekoppelt ist, die sich durch den vorderen Griffabschnitt (40) erstreckt, wobei der vordere Griffabschnitt (40) eine innere rohrförmige Struktur (60) und eine äußere rohrförmige Greifhülse (70) umfasst, **dadurch gekennzeichnet, dass** die äußere rohrförmige Greifhülse (70) mittels mindestens zweier schwingungsabsorbierender elastischer Elemente (81, 82) umlaufend getragen wird, die um die innere rohrförmige Struktur (60) herum derart angeordnet sind, dass ein Umfangsspalt zwischen der inneren rohrförmigen Struktur (60) und der Greifhülse (70) ausgebildet ist, wobei die mindestens zwei schwingungsabsorbierenden elastischen Elemente schwingungsabsorbierende elastische Ringe sind, wobei die Ringe ein bogenförmiges Profil aufweisen.

2. Handgeführtes Elektrowerkzeug (1) nach Anspruch 1, wobei die mindestens zwei schwingungsabsorbierenden elastischen Elemente aus Polyurethan hergestellt sind.

3. Handgeführtes Elektrowerkzeug (1) nach einem der Ansprüche 1 oder 2, wobei die innere rohrförmig Struktur (60) ferner ein Element an dem vorderen Ende davon umfasst, das angeordnet ist, um es nur der äußeren rohrförmigen Greifhülse (70) zu erlauben, sich ein wenig in der axialen Richtung zu bewegen.

4. Handgeführtes Elektrowerkzeug (1) nach einem der Ansprüche 1 bis 3, wobei die äußere rohrförmige Greifhülse (70) ferner Zähne an dem hinteren Ende davon umfasst, die angeordnet sind, um mit den Aussparungen an dem vorderen Ende des Griffabschnitts des hinteren Endes zusammenzuwirken, sodass die äußere rohrförmige Greifhülse sich nur ein wenig drehen kann.

5. Handgeführtes Elektrowerkzeug (1) nach einem der Ansprüche 1 bis 4, wobei die äußere rohrförmige Greifhülse (70) ein kautschukbeschichtetes Stahlrohr ist.

6. Handgeführtes Elektrowerkzeug (1) nach Anspruch 5, wobei der Kautschuk Chloropren oder ein thermoplastisches Elastomer ist.

7. Handgeführtes Elektrowerkzeug (1) nach einem der Ansprüche 1 bis 6, wobei der vordere Griff (40) -Abschnitt von dem hinteren Griffabschnitt (20) lösbar angeordnet ist.

8. Handgeführtes Elektrowerkzeug (1) nach einem der Ansprüche 1 bis 7, wobei die innere rohrförmige Struktur (60) ein Gewinde an dem hinteren Ende davon umfasst, das angeordnet ist, um in das vordere Ende des hinteren Griffabschnitts (20) eingeschraubt zu werden.

9. Handgeführtes Elektrowerkzeug (1) nach einem der Ansprüche 1 bis 8, wobei der hintere Griffabschnitt (20) einen Luftdurchgang an dem vorderen Ende davon umfasst, der angeordnet ist, um eine Erhöhung des Luftdrucks in dem vorderen Griffabschnitt (40) zu verhindern.

## Revendications

1. Outil électrique portatif (1) comprenant :
un boîtier (10), le boîtier (10) comprenant
une partie de poignée arrière (20) à une extrémité arrière de celui-ci ; et
une partie de poignée avant (40) à une extrémité avant de celui-ci, dans lequel un moteur est agencé dans la partie de poignée arrière (20) et couplé à un axe de sortie (50) s'étendant à travers la partie de poignée avant (40), dans lequel la partie de poignée avant (40) comprend une structure tubulaire interne (60) et un manchon de préhension tubulaire externe (70), **caractérisé en ce que** le manchon de préhension tubulaire externe (70) est supporté circonférentiellement par au moins deux éléments élastiques absorbant les vibrations (81, 82) disposés autour de ladite structure tubulaire interne (60), de telle sorte qu'un espace circonférentiel est formé entre ladite structure tubulaire interne (60) et ledit manchon de préhension (70), dans lequel les au moins deux éléments élastiques absorbant les vibrations sont des anneaux élastiques absorbant les vibrations, lesquels anneaux ont un profil en forme d'arc.

2. Outil électrique portatif (1) selon la revendication 1, dans lequel les au moins deux éléments élastiques absorbant les vibrations sont réalisés en polyuréthane.

3. Outil électrique portatif (1) selon l'une quelconque des revendications 1 ou 2, dans lequel la structure tubulaire interne (60)comprend en outre un élément à l'extrémité avant de celle-ci, agencé pour permettre au manchon de préhension tubulaire externe (70) de se déplacer seulement d'une faible mesure dans la direction axiale.

4. Outil électrique portatif (1) selon l'une quelconque des revendications 1 à 3, dans lequel le manchon de préhension tubulaire externe (70) comprend en outre des dents à l'extrémité arrière de celui-ci, agencées pour interagir avec les évidements à l'extrémité avant de la partie de poignée d'extrémité arrière de sorte que le manchon de préhension tubulaire externe ne puisse tourner que d'une faible mesure.

5. Outil électrique portatif (1) selon l'une quelconque des revendications 1 à 4, dans lequel le manchon de préhension tubulaire externe (70) est un tuyau en acier revêtu de caoutchouc.

6. Outil électrique portatif (1) selon la revendication 5, dans lequel le caoutchouc est du chloroprène ou un élastomère thermoplastique.

7. Outil électrique portatif (1) selon l'une quelconque des revendications 1 à 6, dans lequel la partie de poignée avant (40) est agencée de manière amovible depuis la partie de poignée arrière (20).

8. Outil électrique portatif (1) selon l'une quelconque des revendications 1 à 7, dans lequel la structure tubulaire interne (60) comprend un filetage à l'extrémité arrière de celui-ci, agencé pour être vissé dans l'extrémité avant de la partie de poignée arrière (20).

9. Outil électrique portatif (1) selon l'une quelconque des revendications 1 à 8, dans lequel la partie de poignée arrière (20) comprend un passage d'air à l'extrémité avant de celle-ci, agencé pour empêcher une augmentation de la pression d'air dans la partie de poignée avant (40).
